# EUROPEAN PATENT SPECIFICATION

(11) **EP 2 865 276 B1**
(45) Date of publication and mention of the grant of the patent: **27.05.2020**
(21) Application number: 14186236.7
(22) Date of filing: 24.09.2014
(51) Int. Cl.: A23L 5/10, A23N 12/04

(54) **COOKER DEVICE FOR TRANSFERRING, MOVING AND AT LEAST PARTIAL COOKING OF FOOD PRODUCTS**
KOCHVORRICHTUNG ZUM ÜBERTRAGEN, BEWEGEN UND ZUMINDEST TEILWEISEN KOCHEN VON NAHRUNGSMITTELPRODUKTEN
DISPOSITIF DE CUISSON POUR LE TRANSFERT, DÉPLACEMENT ET AU MOINS LA CUISSON PARTIELLE DE PRODUITS ALIMENTAIRES

(30) Priority: 24.09.2013 IT PR20130073
(43) Date of publication of application: 29.04.2015
(73) Proprietor: Storci S.p.A., 43044 Collecchio (PR) (IT)
(72) Inventor: Serventi, Alberto, 43044 Collecchio (PR) (IT)
(74) Representative: Fanzini, Valeriano

(56) References cited:
- FR-A- 1 575 644
- GB-A- 2 298 122
- US-A- 2 314 871
- US-A- 5 341 729
- US-A- 5 752 431
- US-A1- 2003 230 198

## Description

### FIELD OF APPLICATION OF THE INVENTION

The present finding is inserted in the food field and specifically in the field of plants/apparatuses and systems for moving and transferring foods and the processing thereof.

Specifically, the invention regards a cooler-cooker apparatus, capable of receiving, moving and at least partially cooking one or more semifinished food products, releasing them at the end towards a line downstream of the cooker itself.

It is known to operate by cooking, inside a tank, the product to be packaged, so as to operate on the latter at least one step of cooking and/or scalding, after which the food product:
- is transferred towards a further processing system,
- is cooled and then packaged.

### STATE OF THE ART

Cooker devices or apparatuses for industrial use are known which are suitable for executing at least one partial cooking cycle of food products. Examples of these include the patents US7735415 and US8006613.

The devices of the prior art comprise a lower half-tank inside of which water is present maintained at a temperature (for cooking or scalding) by suitable heating and control means; in said tank, a drum is horizontally housed that is free to axially rotate.

The drum bears a central rotation shaft, along which a thread is extended that is adapted to obtain a screw such that, once the product is loaded from a loading end, this is situated immersed in the cooking water, to be advanced following the actuation of the rotating drum.

The final part corresponds with the product unloading; said unloading step occurs with a plurality of cups, distributed on a wheel and which are immersed in the water, loading the incoming product and unloading it towards the outside or in a suitable drainage chute.

The defects of the prior art are of two types:
- A first drawback regards the product advancement screw which is of the type with only one start, i.e. only one thread; it may occur that a certain quantity of product is not exactly inserted upon the passage of the set thread, with the consequence that the product remains for a longer or shorter time according to the position where it is situated upon passage of the thread.
- A second drawback regards the product loading cups; the latter are not closed and do not ensure the effective loading of all the product at the end of the transfer step, i.e. at the end of cooking.

It follows that extremely non-uniform products will be obtained, some more cooked than others, with negative consequences for the final product quality; uniform cooking values of the packaged product cannot be ensured.

Furthermore document GB 2298122 states a continuous method and apparatus for cooking cereal grains. The method comprises two stages, a first continuous pre-cooking stage wherein the grains are hydrated by heating in water and a second continuous stage wherein the grains are heated in water. The apparatus comprises a cooking chamber having screw conveying means therein and a perforated basket for containing the grains.

This apparatus does not thoroughly control the amount of product since the beginning of the machine.

Also document US 2314871 discloses an apparatus for treating foodstuffs comprising a first external not movable drum and a second internal concentric movable drum with a single screw and three buckets at the end head; the bucket can work lifting and discharging the product when the bucket assumes the elevated position, namely for gravity. So none axial thrust is imposed by the bucket.

### EXPOSITION AND ADVANTAGES OF THE FINDING

Object of the present finding is to remedy the above-lamented drawbacks by providing the art with a device and system for moving and cooking food products which:
- ensures greater precision in the step of insertion at the screw inlet so as to have the product moving already at the passage of the corresponding thread, improving the precision of the cooking time;
- ensures the effective expulsion of the entire product at the end of the transfer step, i.e. at the end of cooking.

The first object is resolved with the use of a cooker drum having not one but multiple screws, i.e. multiple threads, in the technical jargon multiple starts, on the rotation shaft; this reduces by 1/2, 1/3, 1/N (where N is the number of starts) the possible stay time of the product before its advancement in the tank, due to the thread itself.

The conformation of the inlet of the rotating drum does not allow the product to be able to jump over any of the advancement starts, since the zone is delimited by a partition that requires the incoming product to fall in the first start, and in this manner one can ensure that the entire product that will enter in the cooker will pass the same time in the cooking water.

In addition, the fact that each start ends with an unloading cup thereof, integral therewith, ensures that all of the incoming product will then be unloaded at the cooker outlet, without leaving remnants in the cooker tank.

The second object of the present invention is resolved by arranging an unloading cup or blade integral with each thread present on the drum; this ensures that all the product advancing with that thread is evacuated as soon as it reaches the outlet zone.

The conformation of the unloading cup or blade placed at the end of each start confers an axial thrust to the product that is essential for the exit of the product from the tank. Indeed this was not conceived as a simple collection blade, its particular shape allows the product to be directed towards the outlet, thus considerably improving the unloading operations.

Hence, the advantages of the present finding are the following:
- improved cooking precision;
- effective expulsion of all the product at the end of the transfer step.

Said objects and advantages are all attained by the device and system for moving and cooking food products, object of the present finding, which is characterized with regard to that provided in the below-reported claims.

### BRIEF DESCRIPTION OF THE FIGURES

This and other characteristics will be clearer from the following description of several illustrated embodiments, as a merely non-limiting example in the enclosed drawing tables.

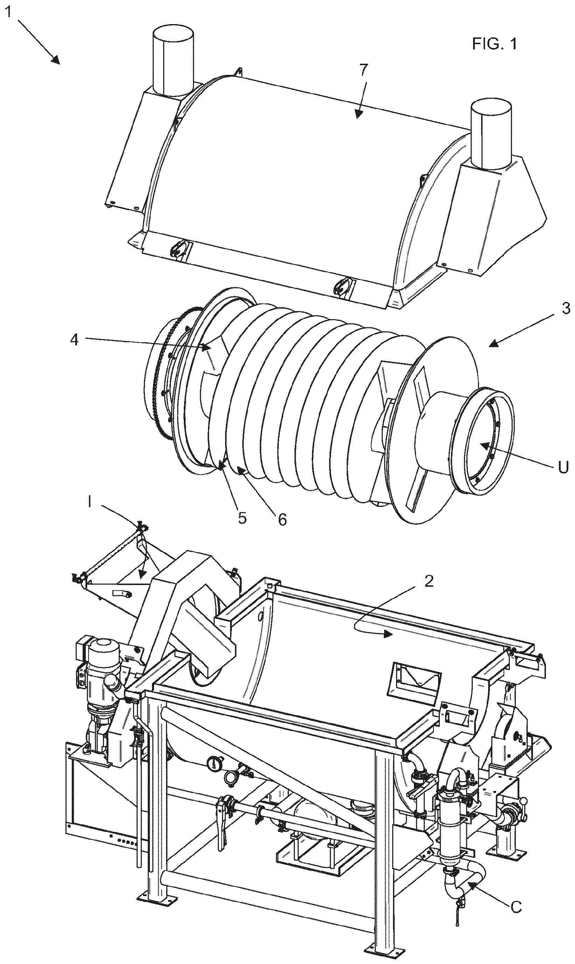

- Figures 1, 2, and 3: illustrate the present cooker device, with loading and unloading system, object of the patent, i.e. with multiple starts and with product collection and unloading cup integral with each start.
- Figures 4, 5, 6, 7: illustrate details of the product unloading cups or blades placed integral with each thread and at the outlet; the particular conformation confers an axial thrust to the product that is essential for the exit of the product from the tank.

### DESCRIPTION OF THE FINDING

With particular reference to the figures, reference number 1 indicates overall a cooker device for the transferring, moving and the at least partial cooking of food products to be packaged or further processed in a line downstream.

As the figures show, the device comprises at least one lower half-tank 2 within which water is introduced in the operative step, with recirculation systems that are already known and hence lie outside the present invention.

The water will be at the temperature suitable for inducing a cooking or pre-cooking on the food product introduced in a loading zone I and exiting from an unloading zone U.

The device 1 bears means C, for the recirculation and maintenance of the water at the temperature set inside the tank 2.

The half-tank is closable with a cover, indicated with 7, so as to isolate the machine and keep it clean during the operating steps thereof.

Inside, between the cover and tank, a product advancement drum 3 is present comprising, in the example, three starts or threads indicated with 4, 5 and 6; said starts are offset from each other: in such a manner, each 120° the loading is ensured also of the product that may not have been loaded from the inlet I (in this case a chute), precisely in the set thread.

The drum 3 bears a shaft 8 situated substantially horizontal inside the machine 1.

The drum 3 is controllable in axial rotation by means of known type such that, following the axial rotation AA, each thread 4, 5, 6 drives the product forward towards the outlet U placed at the opposite end.

Means are not described here for placing the drum in rotation, nor are the water heating and control means described since these are already known to a man skilled in the art.

In operative conditions, the drum is partially immersed in the water.

The product is made to advance from the starts 4, 5, 6, floating in the water it is also cooked according to the stay time necessary for completing the travel to the outlet U of the machine.

According to a variant embodiment, at the end of each start, and at the outlet section, each thread 4, 5, 6 comprises a system of walls such to act as collection cups T integral with the drum and which are immersed in the water, loading the incoming product and unloading it to the outside or in a suitable drainage chute.

The cups unload the product when they are situated at the outlet U of the device.

Each cup T is integral with the respective thread 4, 5, 6.

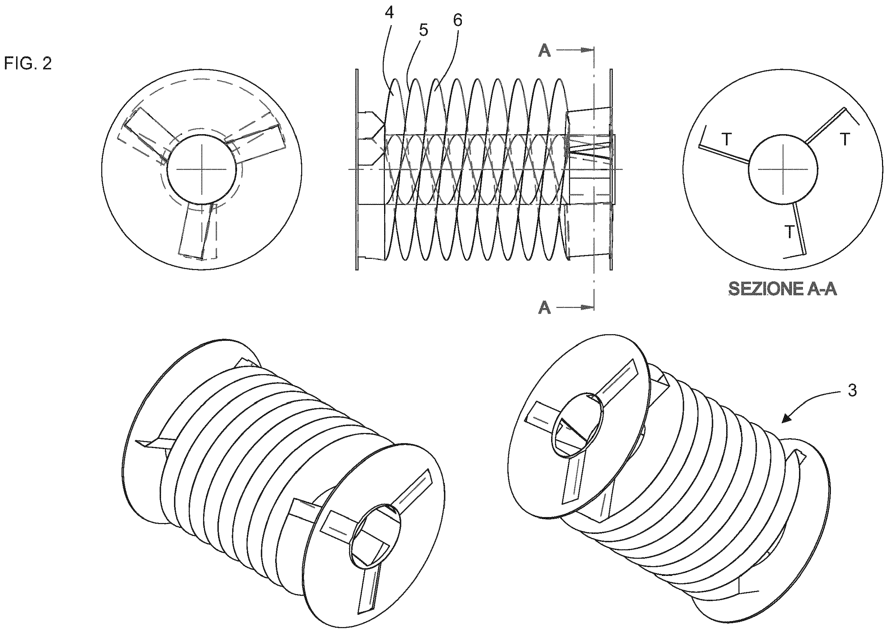

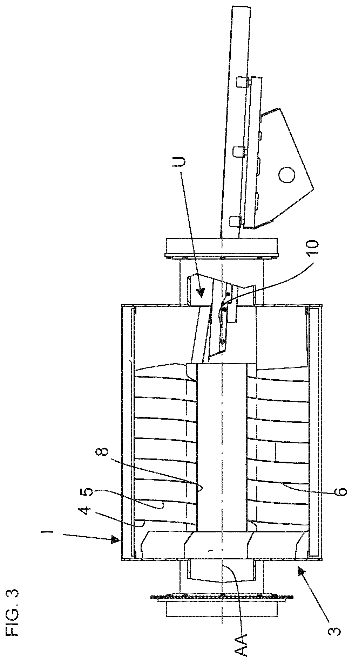

Figures 2 and 3 illustrate in detail the conformation of the drum 3, i.e. its three starts which contribute to forming the advancement screw and the three cups T.

In the example, reference is made to a cooker device with three starts; nevertheless, protection is requested for a number of starts that is greater than 2.

It is specified that the function of each cup T in the present invention is that of acting as a product collection blade contained within each start and such to facilitate the thrust towards the outlet.

The conformation of the unloading cup T or blade placed at the end of each start 4, 5, 6 confers an axial thrust to the product that is essential for the exit of the product from the tank. The cup T is not conceived as a simple collection blade, rather it is shaped in a manner such that said shape allows the product to be directed towards the outlet, thus considerably improving the unloading operations.

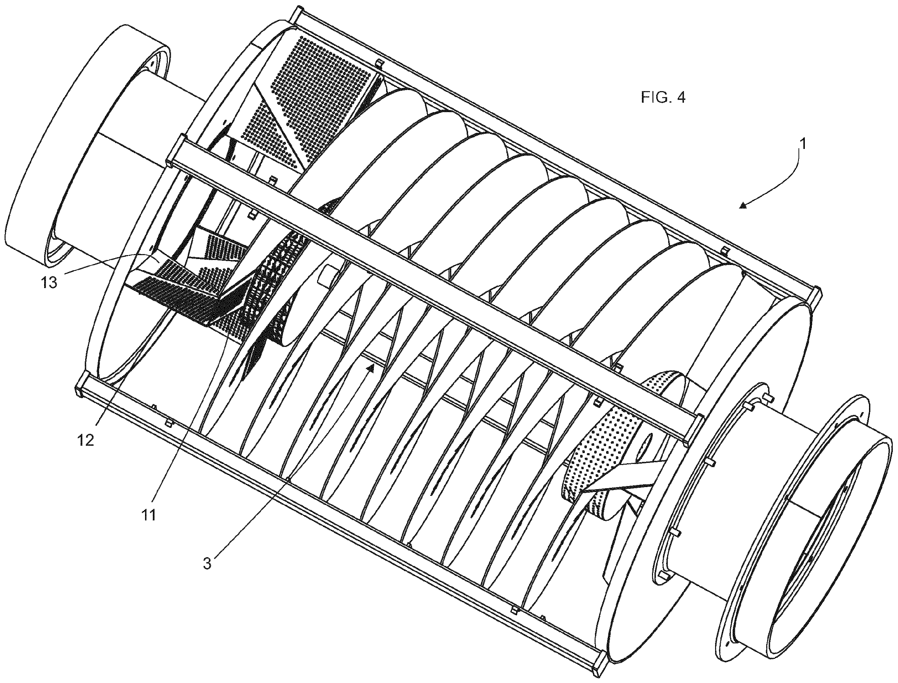

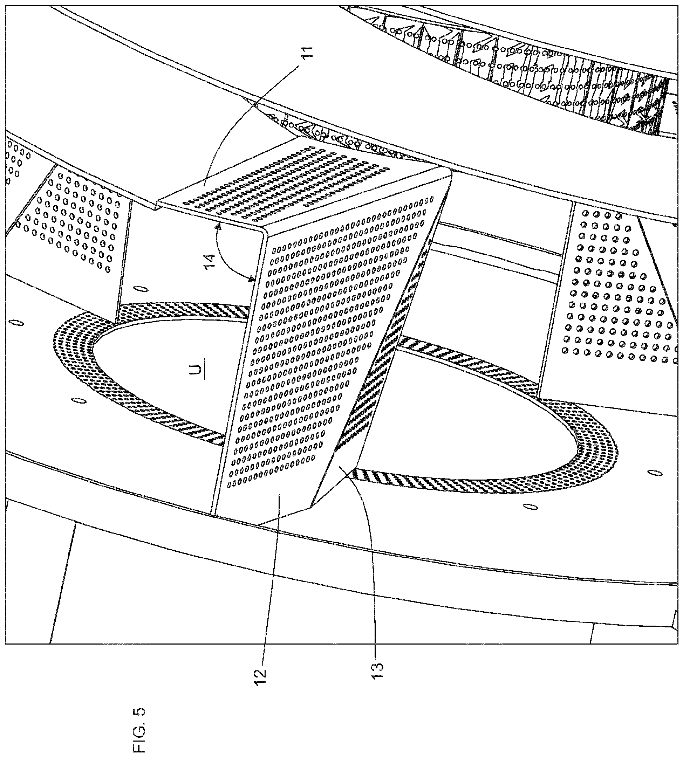

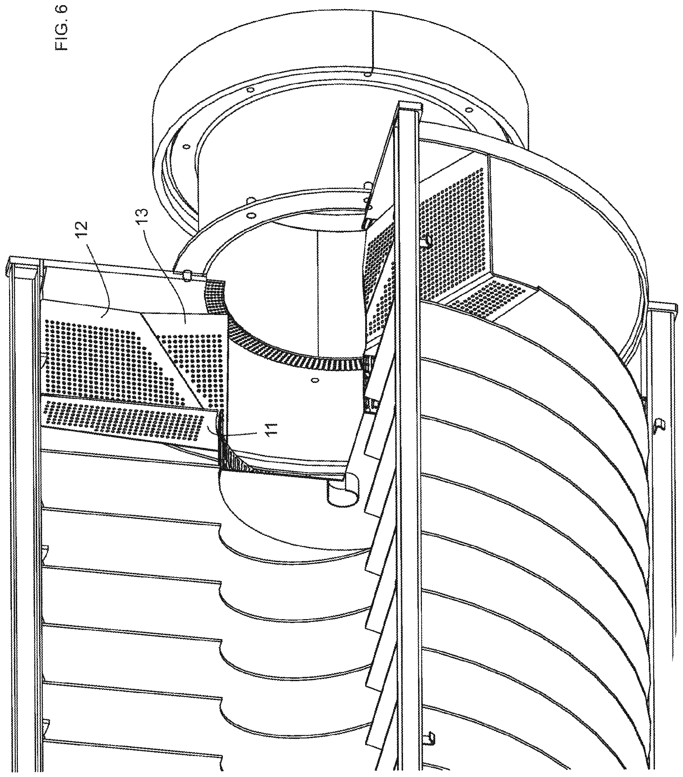

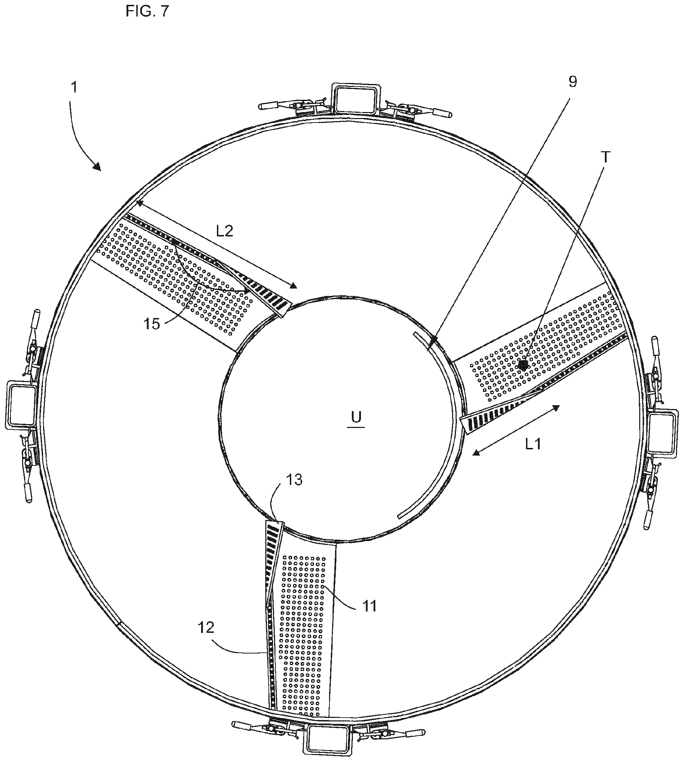

In detail, and with reference to figures 4, 5, 6 and 7, the shape of one of the cups T is described in detail.

The cup is substantially configured as a blade, with two adjacent portions 11 and 12 that are bent with respect to each other; the portion indicated in the figure with 11 is the blade portion that is directly attached to the respective start or thread of the screw, the portion 12 is bent towards the outlet and forms with said first portion 11 a bend angle, indicated with 14, that is less than 90°.

With regard to said portion 12, which is the surface on which the product is accumulated before unloading, it is observed that one edge 13 thereof, particularly the edge facing towards the axis AA, is further bent in a manner so as to create an angle 15 with said surface; said angle 15 is less than 180°; a preferred value, as in the figure, is 175°; in any case, said tilt different from that of a flat angle between the surfaces 12 and 13 is such to allow an effective action of lifting of the product and unloading towards the outlet U.

For such purpose, the presence is observed of a curved frame or partition 9 that is positioned in the outlet zone, cooperating for the product unloading action. The partition 9 is fixed.

In the illustrated example, the cups T unload the product on a channel on a vibrating conduit 10 downstream of the device 1.

The partitions 11, 12, 13 have a plurality of holes for the drainage of the cooking water.

Preferably the edge 13 is extended for a length L1 less than or equal to half a length L2 of the surface 12.

## Claims

1. Cooker device (1) for the transferring, moving and the at least partial cooking of food products to be packaged or further processed in a line downstream, of the type comprising
a. at least one lower half-tank (2) which receives cooking water in the operative step,
b. a loading zone (I) and, at the outlet, an unloading zone (U),
a product advancement drum (3) immersed in the water, for product advancement from the inlet point (I) to the outlet point (U), by means of at least one product advancement screw; said drum (3) controllable in axial rotation (AA); in operative conditions, the drum is partially immersed in the water; the drum (3) is formed by two or more starts or threads (4, 5, 6) offset from each other;the cooker device (1) being **characterized in that**:
o each of said two or more starts or threads (4, 5, 6) starts from the inlet of the rotating drum (3) to the outlet point (U),
o at the end of each start or thread (4, 5, 6), an unloading cup or blade (T) unloads the product at the outlet (U); each cup or blade (T) being integral with the respective thread; said cup or blade (T) comprising two adjacent portions (11) and (12) in which the portion (12) is bent towards the outlet conferring in operative conditions an axial thrust to the product for the exit from the tank (2).

2. Device according to claim 1 **characterized in that** said portions (11) and (12) are bent with respect to each other, said portion (12) forms, with said first portion (11), a bend angle that (14) is less than 90°; one edge (13) of said portion (12) of cup or blade (T), i.e. the edge facing towards the axis (AA) of the device, is further bent in a manner so as to create an angle (15) with said surface (12); said angle (15) being less than 180°.

3. Device according to claim 2 **characterized in that** said angle (15) is 175°.

4. Device according to claims 1 and 2 **characterized in that** a curved frame or partition (9) is positioned in the outlet (U) zone and cooperates with said cup or blade (T) for the product unloading action; the partition (9) is fixed.

5. Device according to claim 2 **characterized in that** the edge (13) is extended for a length (L1) less than or equal to half a length (L2) of the surface (12).

## Patentansprüche

1. Kochgerät (1) zum Übertragen, Bewegen, und zumindest teilweisen Garen von Speisen, die verpackt und weiter in einer stromabwärtige Leitung behandelt werden sollen, der Art umfassend:
a. mindestens einen unteren Halbbehälter (2), die Kochwasser während der Betriebsphase erhält,
b. einen Ladebereich (I) und einen Entlade-Bereich (U) am Ausgang,
eine in Wasser eingetauchte Produktvorschubtrommel (3) zum Vorschieben der Produkte vom Eintrittspunkt (I) zum Austrittspunkt (U) durch mindestens eine Produktvorschubschraube; wobei die Trommel (3) in axialer Drehung (AA) einstellbar ist; unter Betriebsbedingungen, ist die Trommel teilweise in Wasser getaucht; die Trommel (3) durch zwei oder mehr Anfangsteile oder Gewinde (4, 5, 6) gebildet, die untereinander gestaffelt sind; das Kochgerät (1) ist **dadurch gekennzeichnet, dass**:
∘ jedes der zwei oder mehr Anfangsteile oder Gewinde (4, 5, 6) beginnt vom Eintritt der rotierenden Trommel (3) bis zum Austrittspunkt (U),
∘ am Ende jedes Anfangsteils oder Gewinde (4, 5, 6), entlädt eine Entladungstasse oder Schaufel (T) das Produkt am Auslass (U); jede Tasse oder Gewinde (T) ist integral mit dem jeweiligen Gewinde gebildet; die Tasse oder Gewinde (T) aus zwei benachbarten Teilen (11) und (12) bestehen, wo das Teil (12) in Richtung Ausgang gebogen wird, um so einen axialen Schub auf das Produkt unter den Arbeitsbedingungen für den Ausgang aus dem Tank (2), auszuüben.

2. Gerät nach Anspruch 1, **dadurch gekennzeichnet, dass** die Teile (11, 12) gegeneinander gebogen sind und das Teil (12) mit dem ersten Teil (11) einen Biegewinkel von weniger als 90° bildet und eine Kante (13) des Teils (12) der Tasse oder Gewinde (T), d. h. die der Achse (AA) des Geräts zugewandte Kante, wird weiter gebogen, um einen Winkel (15) mit der Oberfläche (12) zu bilden; wobei der Winkel (15) beträgt weniger als 180°.

3. Gerät nach Anspruch 2, **dadurch gekennzeichnet, dass** der Winkel (15) 175° beträgt.

4. Gerät nach Ansprüchen 1 und 2, **dadurch gekennzeichnet, dass** ein gekrümmter Rahmen oder Trennwand (9) in der Auslaufzone (U) angeordnet sind und mit der Tasse oder Gewinde (T) für die Entladungsoperation des Produkts kooperieren; und die Trennwand (9) ist fixiert.

5. Gerät nach Anspruch 2, **dadurch gekennzeichnet, dass** sich die Kante (13) über einen Abschnitt (L1) erstreckt, der kleiner oder gleich einem halben Abschnitt (L2) der Oberfläche (12) ist.

## Revendications

1. Dispositif de cuisson (1) destiné à transférer, déplacer et au moins effectuer une cuisson partielle de produits alimentaires, à emballer ou en outre à traiter dans une ligne en aval, du type comprenant:
a. au moins un demi-réservoir inférieur (2), qui reçoit de l'eau de cuisson en phase de fonctionnement,
b. une zone de chargement (I) et une zone de déchargement (U) en sortie,
un tambour d'avancement de produit (3) immergé dans l'eau, pour l'avancement des produits du point d'entrée (I) au point de sortie (U) au moyen d'au moins une vis d'alimentation de produit; le tambour (3) étant réglable en rotation axiale (AA); dans des conditions de fonctionnement, le tambour est partiellement immergé dans l'eau; et le tambour (3) est formé par deux ou plusieurs premières parties ou des filetages (4, 5, 6) décalées entre elles; le dispositif de cuisson (1) est **caractérisé en ce que**:
° chacune desdites deux ou plusieurs premières parties ou filetages initiaux (4, 5, 6) part de l'entrée du tambour rotatif (3) jusqu'au point de sortie (U),
° à la fin de chaque partie initiale ou filetage (4, 5, 6), une tasse ou une pale (T) de déchargement décharge le produit (U) à la sortie; chaque tasse ou pale (T) étant incorporée dans le filetage respectif; la tasse ou pale (T) comprend deux parties adjacentes (11) et (12) dans lesquelles la partie (12) est courbé vers la sortie, de manière à conférer dans les conditions de fonctionnement une poussée axiale au produit pour la sortie du réservoir (2).

2. Dispositif selon la revendication 1, **caractérisé en ce que** les parties (11, 12) sont courbées l'une par rapport à l'autre, et la partie (12) forme un angle de flexion inférieur à 90° avec la première partie (11) ; et un bord (13) de la partie (12) de la tasse ou de pale (T), c'est-à-dire le bord faisant face à l'axe (AA) du dispositif, est en outre plié de manière à former un angle (15) avec la surface (12); et l'angle (15) est inférieur à 180°.

3. Dispositif selon la revendication 2, **caractérisé en ce que** l'angle (15) est de 175°.

4. Dispositif selon les revendications 1 et 2, **caractérisé en ce que** un cadre ou une paroi de séparation (9) incurvée sont disposés dans la zone de sortie (U) et coopérant avec la tasse ou pale (T) pour l'action de déchargement du produit; et la paroi de séparation (9) est fixée.

5. Dispositif selon la revendication 2, **caractérisé en ce que** le bord (13) s'étend sur une section (L1) qui est inférieure ou égale à la moitié d'une section (L2) de la surface (12).
